# EUROPEAN PATENT SPECIFICATION

(11) **EP 4 424 563 B1**
(45) Date of publication and mention of the grant of the patent: **24.12.2025**
(21) Application number: 24160368.7
(22) Date of filing: 28.02.2024
(51) Int. Cl.: B60T 13/26

(54) **TRAILER CONTROL VALVE AND TRAILER CONTROL SYSTEM**
ANHÄNGERSTEUERVENTIL UND ANHÄNGERSTEUERSYSTEM
SOUPAPE DE COMMANDE DE REMORQUE ET SYSTÈME DE COMMANDE DE REMORQUE

(30) Priority: 28.02.2023 CN 202310186842
(43) Date of publication of application: 04.09.2024
(73) Proprietor: ZF Commercial Vehicle Systems (Qingdao) Co., Ltd., Qingdao 266510 (CN)
(72) Inventor: Qiu, Guoguang, QINGDAO, 266510 (CN)
(74) Representative: Eisenführ Speiser

(56) References cited:
- EP-A1- 0 064 357
- EP-B1- 0 600 178
- DE-A1- 3 615 410
- IT-A1- RM20 000 037
- JP-A- 2003 040 102

## Description

### Technical Field

The present invention relates to the technical field of trailer control, and in particular, to a trailer control valve according to the preamble part of claim 1 and a trailer control system.

### Background Art

Trailer control valves are mounted on tractors and used to control braking of trailers. Since paths for transmission of brake air output by the trailer control valves to brake air chambers of the trailers are long, and additionally, there is a certain loss during the transmission of the brake air, the trailer control valves are usually configured to have a predominance (which refers to an increment of an outlet air pressure value relative to a control air pressure value when braking), such that the braking of the trailers is kept in synchronization with the braking of the tractors.

The predominance of the current trailer control valves is fixed once it has been adjusted at the factory. In a subsequent use, output can only be completed according to the fixed predominance.

In EP 0 600 178 B1 a trailer control valve of the kind mentioned in the preamble is described. The trailer control valve is adapted for a compressed-air-operated dual line brake system having a trailer supply line arranged between the towing vehicle and the trailer vehicle and a trailer brake line arranged likewise between the towing vehicle and the trailer vehicle. Therein the trailer supply line is connected by way of a first throttle to the supply line of the towing vehicle and to operate the first throttle a control piston pressurizable with pressure medium on both of its sides by way of respective control chambers is provided. Further in a connecting line between a control chamber for the control piston and a control chamber for a relay piston there is arranged a second throttle.

In driving conditions of the trailers, the mass of the trailers is very different between no-load and heavy-load conditions, which means that the braking force required when braking is also different. The current trailer control valves, due to their fixed predominance, can often only guarantee braking under heavy-load conditions. The trailers are often lighter in light-load or no-load conditions, while the tractors are heavier. In this case, if the braking force is not adjusted, that is, the brake air for trailer braking is still output according to the fixed predominance, a problem may occur that as soon as a brake is slightly applied, trailer tires are likely to be locked up, and thus rub against the ground, resulting in abnormal wear and tear, and even a driving accident.

It should be noted that information disclosed in the above background art section is only used to enhance the understanding of the background of the present invention, and therefore may include information that does not constitute the prior art known to those of ordinary skill in the art.

### Summary of the Invention

In view of this, the present invention provides a trailer control valve of claim 1 and a trailer control system of claim 10. Therein a position of an adjusting piston is automatically adjusted as an air pressure at a predominance adjusting port changes, to change a distance between the adjusting piston and a valve port of a balance piston such that an air pressure predominance of an air outlet relative to a control port of the trailer control valve changes accordingly, allowing the air pressure predominance of the trailer control valve to be automatically adjusted as the air pressure at the predominance adjusting port changes, so that the air pressure predominance of the trailer control valve can be adjusted as a function of the load of the trailer, so as to increase the consistency of the braking of a tractor and a trailer, thereby improving the safety performance of the vehicle.

According to an aspect of the present invention, a trailer control valve is provided, which comprises a relay piston and a balance piston arranged in a first chamber of the relay piston, wherein two end faces of the relay piston are respectively in communication with a control port and located in a brake chamber, the balance piston is connected to a bottom wall of the first chamber via a predominance spring, and there is a space, which is in communication with brake chamber, between the balance piston and a top wall of the first chamber. The trailer control valve further comprises: an adjusting piston arranged in a second chamber of the relay piston, wherein the adjusting piston extends into the first chamber and directly faces a valve port of the balance piston; and a predominance adjusting port in communication with the second chamber, wherein as an air pressure at the predominance adjusting port changes, the adjusting piston is pushed to change a distance from the valve port, such that an air pressure predominance of an air outlet relative to the control port changes.

In some embodiments, the predominance adjusting port is connected to an air bag of a trailer; as an air pressure at the air bag decreases, the adjusting piston is pushed closer to the valve port; and as the air pressure at the air bag increases, the adjusting piston is pushed away from the valve port.

In some embodiments, the adjusting piston has an annular portion engaged with an inner wall of the second chamber, a first rod portion located at a first end of the annular portion, and a second rod portion located at a second end of the annular portion, the first rod portion extends into the first chamber, and the second rod portion abuts against a bottom wall of the second chamber by means of a first spring; and the predominance adjusting port is in communication with the second chamber where the first rod portion is located.

In some embodiments, a first end face of the annular portion is provided with an axially extending limiting rib, and the limiting rib is accommodated in the second chamber where the first rod portion is located, to limit a minimum distance between the adjusting piston and the valve port.

In some embodiments, there are a plurality of limiting ribs evenly distributed in a circumferential direction.

In some embodiments, a peripheral wall of the annular portion is provided with an annular groove; and a sealing ring, which is sealingly fitted with the inner wall of the second chamber, is embedded in the annular groove.

In some embodiments, the valve port is provided with a sealing gasket which abuts against a top wall of the balance piston by means of a second spring; the valve port is spaced apart from the adjusting piston, and the sealing gasket sealingly covers the valve port; and the balance piston pushes the predominance spring until the sealing gasket is pushed by the adjusting piston, the valve port is opened, and part of brake air in the brake chamber enters a pressure regulating chamber through the valve port.

In some embodiments, the trailer control valve further comprises: a valve member fitted with the relay piston, wherein as air enters the control port, the relay piston pushes the valve member to communicate the brake chamber with an air inlet.
In some embodiments, a main spring is connected between the relay piston and a valve wall of the trailer control valve; and as air enters the control port, the relay piston moves against an acting force of the main spring.

According to another aspect of the present invention, a trailer control system is provided, which comprises a trailer control valve according to any one of the above embodiments, wherein the air outlet of the trailer control valve is connected to a brake air chamber of a trailer, and the predominance adjusting port of the trailer control valve is connected to an air bag of the trailer.

Compared with the prior art, the present invention has at least the following beneficial effects.

In the trailer control valve and the trailer control system of the present invention, a position of an adjusting piston is automatically adjusted as an air pressure at a predominance adjusting port changes, to change a distance between the adjusting piston and a valve port of a balance piston such that an air pressure predominance of an air outlet relative to a control port of the trailer control valve changes accordingly, allowing the air pressure predominance of the trailer control valve to be automatically adjusted as the air pressure at the predominance adjusting port changes, so that the air pressure predominance of the trailer control valve can be adjusted as a function of the load of the trailer. Therefore, in addition to inclusion of all functions of existing trailer control valves, the trailer control valve of the present invention can output a different air pressure predominance as the load of the trailer changes, so as to increase the consistency of the braking of a tractor and a trailer, thereby improving the safety performance of the vehicle.

It should be understood that the above general description and the following detailed description are only exemplary and explanatory, and cannot limit the present invention.

### Brief Description of the Drawings

The accompanying drawings herein, which are incorporated into and constitute a part of the description, illustrate embodiments consistent with the present invention and, together with the description, are used to explain principles of the present invention. Obviously, the accompanying drawings described below show merely some of the embodiments of the present invention, and those of ordinary skill in the art would also have obtained other accompanying drawings according to these accompanying drawings without any creative effort.
FIG. 1 is a schematic structural diagram of a trailer control valve according to an embodiment of the present invention; and
FIG. 2 is a schematic structural diagram of an adjusting piston according to an embodiment of the present invention.

### Detailed Description of Embodiments

Now exemplary implementations will be described more fully with reference to the accompanying drawings. However, the exemplary implementations can be implemented in many forms and should not be construed as being limited to the implementations set forth herein. On the contrary, these implementations are provided to make the present invention thorough and complete, and to fully convey the concept of the exemplary implementations to those skilled in the art.

The accompanying drawings are only schematic illustrations of the present invention, and are not necessarily drawn to scale. In the accompanying drawings, the same reference numerals denote the same or similar parts, and thus the repeated description thereof will be omitted. The terms "first", "second" and similar terms used in the specific description do not denote any order, quantity, or importance, and the terms "top", "bottom" and similar terms used are not intended to limit an orientation, but are merely used to distinguish different components. It should be noted that the embodiments in the present invention and features of the various embodiments can be combined with each other without conflict.

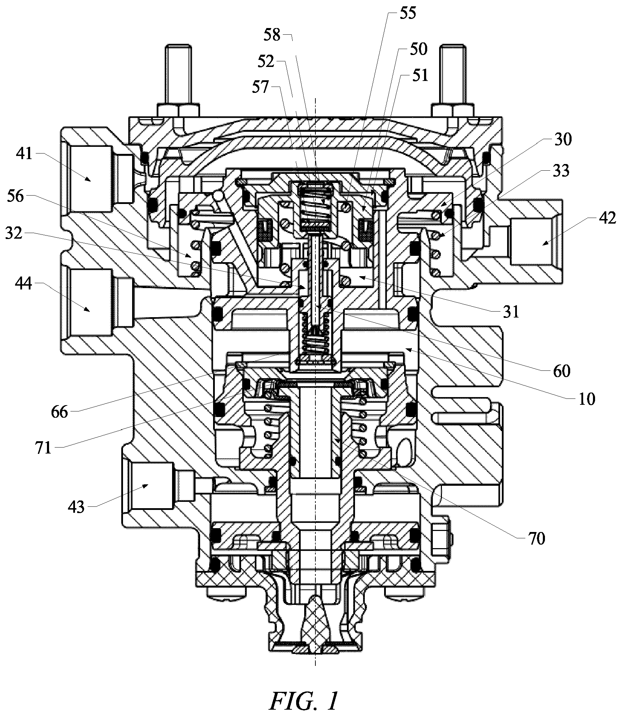

FIG. 1 shows a structure of a trailer control valve according to an embodiment. Referring to FIG. 1, the trailer control valve provided in the embodiment of the present invention comprises:
a relay piston 30 and a balance piston 50 arranged in a first chamber 31 of the relay piston 30. Two end faces of the relay piston 30 are respectively in communication with a control port 42 and located in a brake chamber 10, the balance piston 50 is connected to a bottom wall of the first chamber 31 via a predominance spring 55, and there is a space 51, which is in communication with brake chamber 10, between the balance piston and a top wall of the first chamber 31.

The trailer control valve further comprises:
an adjusting piston 60 arranged in a second chamber 32 of the relay piston 30, where the adjusting piston 60 extends into the first chamber 31 and directly faces a valve port 52 of the balance piston 50; and
a predominance adjusting port 44 in communication with the second chamber 32, where as an air pressure at the predominance adjusting port 44 changes, the adjusting piston 60 is pushed to change a distance from the valve port 52, such that an air pressure predominance of an air outlet (which is not visible from the perspective of FIG. 1) relative to the control port 42 changes.

The control port 42 of the trailer control valve is connected to a foot brake of a tractor and is used to receive brake air from the foot brake. When entering the control port 42, the brake air may push the relay piston 30, causing the relay piston 30 to move against an acting force of a main spring 33 connected between the relay piston and a valve wall of the trailer control valve. The movement of the relay piston 30 may push a valve member 70 fitted therewith to open an air intake valve 71, such that the brake chamber 10 is in communication with an air inlet (which is not visible from the perspective of FIG. 1). The air inlet of the trailer control valve is connected to an air reservoir of the tractor, and the air outlet is connected to a brake air chamber of a trailer. When the air intake valve 71 is opened, the brake air from the air reservoir is transmitted to the brake air chamber of the trailer through the air inlet, the brake chamber 10 and the air outlet to implement braking of the trailer.

As the air pressure at the air outlet continuously increases, part of the brake air in the brake chamber 10 enters the space 51 and pushes the balance piston 50, such that the balance piston 50 moves against the acting force of the predominance spring 55 until the valve port 52 is opened due to the contact with the adjusting piston 60. When the valve port 52 is opened, part of the brake air in the brake chamber 10 enters a pressure regulating chamber 56 through the valve port 52, to push the balance piston 50 to move in a reverse direction, until the valve port 52 comes into contact with and is sealed by both the adjusting piston 60 and a top wall of the balance piston 50. At this time, the air pressure at the air outlet reaches equilibrium.
The valve port 52 is provided with a sealing gasket 57. The sealing gasket 57 abuts against the top wall of the balance piston 50 by means of a second spring 58. The valve port 52 is spaced apart from the adjusting piston 60, and the sealing gasket 57 sealingly covers the valve port 52. The balance piston 50 pushes the predominance spring 55 until the sealing gasket 57 is pushed by the adjusting piston 60, the valve port 52 is opened, and part of the brake air in the brake chamber 10 enters the pressure regulating chamber through the valve port 52.

During the above braking process, the increment of the air pressure value at the air outlet relative to an air pressure value at the control port 42 before the valve port 52 is opened is the air pressure predominance. The larger the air pressure predominance, the higher the brake air pressure output to the brake air chamber of the trailer, and the larger a braking force of the trailer; in contrast, the smaller the air pressure predominance, the lower the brake air pressure output to the brake air chamber of the trailer, and the smaller a braking force of the trailer.

In the trailer control valve of the present invention, when the air pressure at the predominance adjusting port 44 changes, the adjusting piston 60 can automatically adjust its position to change the distance from the valve port 52 of the balance piston 50. When the distance between the adjusting piston 60 and the valve port 52 changes, the air pressure predominance of the air outlet relative to the control port 42 of the trailer control valve changes accordingly, allowing the air pressure predominance of the trailer control valve to be automatically adjusted as the air pressure at the predominance adjusting port 44 changes. The predominance adjusting port 44 may be connected to an air supply source related to the load of the trailer, so that the air pressure predominance of the trailer control valve can be adjusted as a function of the load of the trailer. The larger the load, the larger the air pressure predominance; in contrast, the smaller the load, the smaller the air pressure predominance. Therefore, in addition to inclusion of all functions of existing trailer control valves, the trailer control valve of the present invention can output a different air pressure predominance as the load of the trailer changes, so as to increase the consistency of the braking of the tractor and the trailer, thereby improving the safety performance of the vehicle.

In some embodiments, the predominance adjusting port 44 is connected to an air bag of a trailer; as an air pressure at the air bag decreases, the adjusting piston 60 is pushed closer to the valve port 52; and as the air pressure at the air bag increases, the adjusting piston 60 is pushed away from the valve port 52.

The air pressure of the air bag of the trailer may change as a function of the load of the trailer. The larger the load of the trailer, the higher the air pressure of the air bag. The air pressure of the air bag can enter the trailer control valve through the predominance adjusting port 44, and act on the adjusting piston 60, such that the distance between the adjusting piston 60 and the valve port 52 changes accordingly under different air pressures of the air bag. The varying distance between the adjusting piston 60 and the valve port 52 determines the acting force of the main spring 33 that the relay piston 30 can withstand during the braking. The smaller the distance between the adjusting piston 60 and the valve port 52, the smaller the acting force of the main spring 33 that the relay piston 30 can withstand, and the smaller the air pressure predominance; in contrast, the larger the distance between the adjusting piston 60 and the valve port 52, the larger the acting force of the main spring 33 that the relay piston 30 can withstand, and the larger the air pressure predominance.

Connection of the predominance adjusting port 44 to the air bag of the trailer can implement an intelligent adjustment of the air pressure predominance of the trailer control valve as a function of the load of the trailer. In addition, the consistency of the braking of the tractor and the trailer can be increased only by making a slight change to the original pipeline layout of the vehicle, namely, adding a pipeline which connects the air bag of the trailer to the predominance adjusting port 44 of the trailer control valve, thereby improving the safety performance of the vehicle.

In other embodiments, the predominance adjusting port 44 may alternatively be connected to other suitable gas supply sources, as long as the air pressure at the predominance adjusting port 44 increases as the load of the trailer increases, and the air pressure at the predominance adjusting port 44 decreases as the load of the trailer decreases.

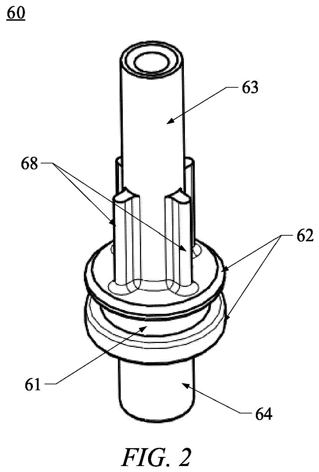

FIG. 2 shows a structure of the adjusting piston according to an embodiment. As shown with reference to FIGS. 1 and 2, in some embodiments, the adjusting piston 60 has an annular portion 62 engaged with an inner wall of the second chamber 32, a first rod portion 63 located at a first end of the annular portion 62, and a second rod portion 64 located at a second end of the annular portion 62. The first rod portion 63 extends into the first chamber 31, and the second rod portion 64 abuts against a bottom wall of the second chamber 32 by means of a first spring 66. The predominance adjusting port 44 is in communication with the second chamber 32 where the first rod portion 63 is located.

In this way, when the air pressure at the predominance adjusting port 44 increases, air in the second chamber 32 where the first rod portion 63 is located pushes the adjusting piston 60 away from the valve port 52; or when the air pressure at the predominance adjusting port 44 decreases, the first spring 66 pushes the adjusting piston 60 closer to the valve port 52.

In some embodiments, a first end face of the annular portion 62 is provided with an axially extending limiting rib 68, and the limiting rib 68 is accommodated in the second chamber 32 where the first rod portion 63 is located, to limit a minimum distance between the adjusting piston 60 and the valve port 52.

With the limiting rib 68, when the air pressure at the predominance adjusting port 44 is very low, the minimum distance can be maintained between the adjusting piston 60 and the valve port 52 to ensure that the trailer control valve has the most basic air pressure predominance.

In some embodiments, there are a plurality of the limiting ribs 68 evenly distributed in a circumferential direction. In this way, a stable limiting effect on the adjusting piston 60 can be implemented.

In some embodiments, a peripheral wall of the annular portion 62 is provided with an annular groove 61; and a sealing ring, which is sealingly fitted with the inner wall of the second chamber 32, is embedded in the annular groove 61. In this way, a sealing fit can be implemented between the adjusting piston 60 and the inner wall of the second chamber 32.

Further, still referring to FIG. 1, the trailer control valve is further equipped with another control port 41. The control port 41 is also connected to the foot brake of the tractor, and is designed to be redundant with the control port 42. In addition, the trailer control valve is equipped with a control port 43 connected to a hand brake of the tractor. These structures are conventional structures of the trailer control valve and will not be described in detail.

Further, an embodiment of the present invention provides a trailer control system. The trailer control system comprises a trailer control valve described in any one of the above embodiments. The air outlet of the trailer control valve is connected to a brake air chamber of a trailer, and the predominance adjusting port 44 of the trailer control valve is connected to an air bag of the trailer. The smart use of the air pressure of the air bag of the trailer to adjust the air pressure predominance of the trailer control valve allows the trailer control valve to actively adjust the air pressure predominance as a function of the load of the trailer, so as to increase the consistency of the braking of the tractor and the trailer, thereby improving the safety performance of the vehicle. In addition, the original pipeline layout of the vehicle only needs to be slightly changed, namely, adding a pipeline which connects the air bag of the trailer to the predominance adjusting port 44 of the trailer control valve.

In summary, the trailer control valve and trailer control system of the present invention have the following beneficial effects.

The position of the adjusting piston 60 is automatically adjusted as the air pressure at the predominance adjusting port 44 changes, to change a distance between the adjusting piston and the valve port 52 of the balance piston 50 such that the air pressure predominance of the air outlet relative to the control port 42 of the trailer control valve changes accordingly, allowing the air pressure predominance of the trailer control valve to be automatically adjusted as the air pressure at the predominance adjusting port 44 changes. Connection of the predominance adjusting port 44 to the air bag of the trailer allows an adjustment of the air pressure predominance of the trailer control valve as a function of the load of the trailer. The larger the load, the larger the air pressure predominance; in contrast, the smaller the load, the smaller the air pressure predominance. Therefore, in addition to inclusion of all functions of existing trailer control valves, the trailer control valve of the present invention can output a different air pressure predominance as the load of the trailer changes, so as to increase the consistency of the braking of the tractor and the trailer, thereby improving the safety performance of the vehicle.

The above is a further detailed description of the present invention with reference to the specific preferred implementations, and it cannot be considered that the specific implementation of the present invention is limited to these descriptions. For those of ordinary skill in the art of the present invention, several simple deductions or substitutions can be further made without departing from the concept of the present invention, and should be regarded as falling within the scope of protection of the present invention.

## Claims

1. A trailer control valve, comprising:
- a relay piston (30) and a balance piston (50) arranged in a first chamber (31) of the relay piston,
- two end faces of the relay piston (30) being respectively in communication with a control port 42 and located in a brake chamber (10), the balance piston (50) being connected to a bottom wall of the first chamber (31) via a predominance spring (55), and there being a space (51), which is in communication with the brake chamber (10), between the balance piston (50) and a top wall of the first chamber (31);
- an adjusting piston (60) arranged in a second chamber (32) of the relay piston (30), wherein the adjusting piston (60) extends into the first chamber (31) and directly faces a valve port (52) of the balance piston (50);
**characterized in that** the trailer control valve further comprises:
- a predominance adjusting port (44) in communication with the second chamber (32), wherein as an air pressure at the predominance adjusting port (44) changes, the adjusting piston (60) is pushed to change a distance from the valve port (52), such that an air pressure predominance of an air outlet relative to the control port (42) changes.

2. The trailer control valve according to claim 1, **characterized in that** the predominance adjusting port (44) is connected to an air bag of a trailer;
as an air pressure at the air bag decreases, the adjusting piston (60) is pushed closer to the valve port (52); and
as the air pressure at the air bag increases, the adjusting piston (60) is pushed away from the valve port (52).

3. The trailer control valve according to claim 1, **characterized in that** the adjusting piston (60) has an annular portion (62) engaged with an inner wall of the second chamber (32), a first rod portion (63) located at a first end of the annular portion (62), and a second rod portion (64) located at a second end of the annular portion (62), the first rod portion (63) extends into the first chamber (31), and the second rod portion (64) abuts against a bottom wall of the second chamber (32) by means of a first spring (66); and
the predominance adjusting port (44) is in communication with the second chamber (32) where the first rod portion (63) is located

4. The trailer control valve according to claim 3, **characterized in that** a first end face of the annular portion (62) is provided with an axially extending limiting rib (68), and the limiting rib (68) is accommodated in the second chamber (32) where the first rod portion (63) is located, to limit a minimum distance between the adjusting piston (60) and the valve port (52).

5. The trailer control valve according to claim 4, **characterized in that** there are a plurality of limiting ribs (68) evenly distributed in a circumferential direction.

6. The trailer control valve according to claim 3, **characterized in that** a peripheral wall of the annular portion (62) is provided with an annular groove (61); and
a sealing ring, which is sealingly fitted with the inner wall of the second chamber (32), is embedded in the annular groove (61).

7. The trailer control valve according to claim 1, **characterized in that** the valve port (52) is provided with a sealing gasket (57) which abuts against a top wall of the balance piston (50) by means of a second spring (58);
the valve port (52) is spaced apart from the adjusting piston (60), and the sealing gasket (57) sealingly covers the valve port (52); and
the balance piston (50) pushes the predominance spring (55) until the sealing gasket (57) is pushed by the adjusting piston (60), the valve port (52) is opened, and part of brake air in the brake chamber (10) enters a pressure regulating chamber through the valve port (52).

8. The trailer control valve according to claim 1, **characterized by** further comprising:
a valve member (70) fitted with the relay piston (30), wherein
as air enters the control port (42), the relay piston (30) pushes the valve member (70) to communicate the brake chamber (10) with an air inlet.

9. The trailer control valve according to claim 8, **characterized in that** a main spring (33) is connected between the relay piston (30) and a valve wall of the trailer control valve; and
as air enters the control port (42), the relay piston (30) moves against an acting force of the main spring (33).

10. A trailer control system, **characterized by** comprising a trailer control valve according to any one of claims 1 to 9, wherein the air outlet of the trailer control valve is connected to a brake air chamber of a trailer, and the predominance adjusting port (44) of the trailer control valve is connected to an air bag of the trailer.

## Patentansprüche

1. Anhängersteuerventil, umfassend:
- einen Relaiskolben (30) und einen Ausgleichskolben (50), angeordnet in einer ersten Kammer (31) des Relaiskolbens,
- wobei zwei Stirnseiten des Relaiskolbens (30) jeweils mit einer Steueröffnung (42) in Verbindung stehen und in einer Bremskammer (10) angeordnet sind, wobei der Ausgleichskolben (50) über eine Vorrangfeder (55) mit einer Bodenwand der ersten Kammer (31) verbunden ist und zwischen dem Ausgleichskolben (50) und einer oberen Wand der ersten Kammer (31) ein Raum (51) vorliegt, der mit der Bremskammer (10) in Verbindung steht;
- einen Einstellkolben (60), angeordnet in einer zweiten Kammer (32) des Relaiskolbens (30), wobei der Einstellkolben (60) sich in die erste Kammer (31) hinein erstreckt und einer Ventilöffnung (52) des Ausgleichskolbens (50) direkt zugewandt ist;
**dadurch gekennzeichnet, dass** das Anhängersteuerventil ferner umfasst:
- eine Vorrangeinstellöffnung (44) in Verbindung mit der zweiten Kammer (32), wobei bei Änderung eines Luftdrucks an der Vorrangeinstellöffnung (44) der Einstellkolben (60) gedrückt wird, um einen Abstand von der Ventilöffnung (52) zu ändern, sodass ein Luftdruckvorrang eines Luftauslasses sich relativ zu der Steueröffnung (42) ändert.

2. Anhängersteuerventil nach Anspruch 1, **dadurch gekennzeichnet, dass** die Vorrangeinstellöffnung (44) mit einem Luftbalg eines Anhängers verbunden ist;
wobei mit abnehmendem Luftdruck am Luftbalg der Einstellkolben (60) näher an die Ventilöffnung (52) gedrückt wird; und
mit zunehmendem Luftdruck am Luftbalg der Einstellkolben (60) von der Ventilöffnung (52) weg gedrückt wird.

3. Anhängersteuerventil nach Anspruch 1, **dadurch gekennzeichnet, dass** der Einstellkolben (60) einen ringförmigen Abschnitt (62), der eine Innenwand der zweiten Kammer (32) in Eingriff nimmt, einen ersten Stababschnitt (63), der an einem ersten Ende des ringförmigen Abschnitts (62) angeordnet ist, und einen zweiten Stababschnitt (64), der an einem zweiten Ende des ringförmigen Abschnitts (62) angeordnet ist, aufweist, wobei der erste Stababschnitt (63) sich in die erste Kammer (31) erstreckt, und der zweite Stababschnitt (64) über eine erste Feder (66) an einer Bodenwand der zweiten Kammer (32) anliegt; und
die Vorrangeinstellöffnung (44) mit der zweiten Kammer (32) in Verbindung steht, in der der erste Stababschnitt (63) angeordnet ist.

4. Anhängersteuerventil nach Anspruch 3, **dadurch gekennzeichnet, dass** eine erste Stirnfläche des ringförmigen Abschnitts (62) mit einer axial verlaufenden Begrenzungsrippe (68) versehen ist und die Begrenzungsrippe (68) in der zweiten Kammer (32), in der der erste Stababschnitt (63) angeordnet ist, aufgenommen ist, um einen minimalen Abstand zwischen dem Einstellkolben (60) und der Ventilöffnung (52) zu begrenzen.

5. Anhängersteuerventil nach Anspruch 4, **dadurch gekennzeichnet, dass** eine Vielzahl von in Umfangsrichtung gleichmäßig verteilten Begrenzungsrippen (68) vorliegt.

6. Anhängersteuerventil nach Anspruch 3, **dadurch gekennzeichnet, dass** eine Umfangswand des ringförmigen Abschnitts (62) mit einer ringförmigen Nut (61) versehen ist; und
ein Dichtring, der an der Innenwand der zweiten Kammer (32) dichtend eingebaut ist, in die ringförmige Nut (61) eingebettet ist.

7. Anhängersteuerventil nach Anspruch 1, **dadurch gekennzeichnet, dass** die Ventilöffnung (52) mit einer Dichtung (57) versehen ist, die mittels einer zweiten Feder (58) an einer oberen Wand des Ausgleichskolbens (50) anliegt;
wobei die Ventilöffnung (52) von dem Einstellkolben (60) beabstandet ist, und die Dichtung (57) die Ventilöffnung (52) dichtend abdeckt; und
der Ausgleichskolben (50) die Vorrangfeder (55) drückt, bis die Dichtung (57) durch den Einstellkolben (60) gedrückt wird, die Ventilöffnung (52) geöffnet wird und ein Teil der Bremsluft in der Bremskammer (10) durch die Ventilöffnung (52) in eine Druckregelkammer eintritt.

8. Anhängersteuerventil nach Anspruch 1, **dadurch gekennzeichnet, dass** es ferner umfasst:
ein Ventilelement (70), das mit dem Relaiskolben (30) versehen ist, wobei,
wenn Luft in die Steueröffnung (42) eintritt, der Relaiskolben (30) das Ventilelement (70) drückt, um die Bremskammer (10) mit einem Lufteinlass zu verbinden.

9. Anhängersteuerventil nach Anspruch 8, **dadurch gekennzeichnet, dass** zwischen dem Relaiskolben (30) und einer Ventilwand des Anhängersteuerventils eine Hauptfeder (33) geschaltet ist; und,
wenn Luft in die Steueröffnung (42) eintritt, der Relaiskolben (30) sich gegen eine wirkende Kraft der Hauptfeder (33) bewegt.

10. Anhängersteuersystem, **dadurch gekennzeichnet, dass** es ein Anhängersteuerventil nach einem der Ansprüche 1 bis 9 umfasst, wobei der Luftauslass des Anhängersteuerventils mit einer Bremsluftkammer eines Anhängers verbunden ist und die Vorrangeinstellöffnung (44) des Anhängersteuerventils mit einem Luftbalg des Anhängers verbunden ist.

## Revendications

1. Une soupape de commande de remorque, comprenant :
- un piston (30) de relais et un piston (50) d'équilibrage disposé dans une première chambre (31) du piston de relais,
- deux faces d'extrémité du piston (30) de relais étant en communication respectivement avec un orifice (42) de commande et placées dans une chambre (10) de freinage, le piston (50) d'équilibrage étant assemblé à une paroi de fond de la première chambre (31) par un ressort (55) de prédominance, et il y a un espace (51), qui est en communication avec la chambre (10) de freinage, entre le piston (50) d'équilibrage et une paroi de sommet de la première chambre (31) ;
- un piston (60) de réglage disposé dans une deuxième chambre (32) du piston (30) de relais, dans lequel le piston (60) de réglage s'étend dans la première chambre (31) et fait face directement à un orifice (52) de soupape du piston (50) d'équilibrage ;
**caractérisée en ce que** la soupape de commande de remorque comprend en outre:
- un orifice (44) de réglage de prédominance en communication avec la deuxième chambre (32), dans lequel, alors qu'une pression de l'air à l'orifice (44) de réglage de prédominance change, le piston (60) de réglage est poussé pour changer une distance à l'orifice (52) de soupape, de manière à ce qu'une prédominance de la pression de l'air d'une sortie d'air relativement à l'orifice (42) de commande change.

2. La soupape de remorque suivant la revendication 1, **caractérisée en ce que** l'orifice (44) de réglage de prédominance communique avec un coussin d'air d'une remorque ;
alors qu'une pression d'air au coussin d'air diminue, le piston (60) de réglage est poussé plus près de l'orifice (52) de soupape ; et
alors que la pression de l'air au coussin d'air augmente, le piston (60) de réglage est éloigné de l'orifice (52) de soupape.

3. La soupape de remorque suivant la revendication 1, **caractérisée en ce que** le piston (60) de réglage a une partie (62) annulaire introduite dans une paroi intérieure de la deuxième chambre (32), une première partie (63) de tige située à une première extrémité de la partie (62) annulaire, et une deuxième partie (64) de tige située à une deuxième extrémité de la partie (62) annulaire, la première partie (63) de tige s'étend dans la première chambre (31), et la deuxième partie (64) de tige bute sur une paroi de fond de la deuxième chambre (32) au moyen d'un premier ressort (66) ; et
l'orifice (44) de réglage de prédominance est en communication avec la deuxième chambre (32) où est située la première partie (63) de tige.

4. La soupape de remorque suivant la revendication 3, **caractérisée en ce qu'**une première face d'extrémité de la partie (62) annulaire est pourvue d'une nervure (68) de limitation s'étendant axialement, et la nervure (68) de limitation est logée dans la deuxième chambre (32) où la première partie (63) de piston est située, afin de limiter une distance minimum entre la partie (60) de réglage et l'orifice (52) de soupape.

5. La soupape de remorque suivant la revendication 4, **caractérisée en ce qu'**il y a une pluralité de nervures (68) de limitation réparties également dans une direction circonférentielle.

6. La soupape de remorque suivant la revendication 3, **caractérisée en ce qu'**une paroi périphérique de la partie (62) annulaire est pourvue d'une rainure (61) annulaire ; et
une bague d'étanchéité, qui est adaptée à étanchéité à la paroi intérieure de la deuxième chambre (32), est logée dans la rainure (61) annulaire.

7. La soupape de remorque suivant la revendication 1, **caractérisée en ce que** l'orifice (52) de soupape est pourvu d'un joint (57) d'étanchéité, qui bute sur une paroi de sommet du piston (50) d'équilibrage au moyen d'un deuxième ressort (58) ;
l'orifice (52) de soupape est à distance du piston (60) de réglage, et le joint (57) d'étanchéité recouvre avec étanchéité l'orifice (52) de soupape ; et
le piston (50) d'équilibrage pousse le ressort (55) de prédominance jusqu'à ce que le joint (57) d'étanchéité soit poussé par le piston (60) de réglage, l'orifice (52) de soupape soit ouvert, et une partie de l'air de freinage dans la chambre (10) de freinage entre dans une chambre de régulation de la pression en passant par l'orifice (52) de soupape.

8. La soupape de remorque suivant la revendication 1, **caractérisée en ce qu'**elle comprend en outre :
un élément (70) de soupape adapté au piston (30) de relais, alors que
de l'air entre dans l'orifice (42) de commande, le piston (30) de relais pousse l'élément (70) de soupape afin de faire communiquer la chambre (10) de freinage avec une entrée d'air.

9. La soupape de remorque suivant la revendication 8, **caractérisée en ce qu'**un ressort (33) principal est monté entre le piston (30) de relais et une paroi de la soupape de commande de remorque ; et
alors que de l'air entre dans l'orifice (42) de commande, le piston (30) de relais se déplace à l'encontre d'une force du ressort (33) principal.

10. Un système de commande de remorque, **caractérisé en ce qu'**il comprend une soupape de contrôle de remorque suivant l'une quelconque des revendications 1 à 9, dans lequel la sortie d'air de la soupape de commande de remorque communique avec une chambre d'air de freinage d'une remorque, et l'orifice (44) de réglage de prédominance de la soupape de commande de remorque communique avec un coussin d'air de la remorque.
